Europäisches Patentamt

European Patent Office

Office européen des brevets

(11) Numéro de publication: **0 427 584 A1**

# DEMANDE DE BREVET EUROPEEN

(21) Numéro de dépôt: 90402921.2

(22) Date de dépôt: 17.10.90

(51) Int. Cl.5: **B62D 1/18**, F16B 2/16, F16B 7/14

(30) Priorité: 09.11.89 FR 8914708

(43) Date de publication de la demande:
15.05.91 Bulletin 91/20

(84) Etats contractants désignés:
AT BE CH DE DK ES FR GB GR IT LI LU NL SE

(71) Demandeur: ECIA - EQUIPEMENTS ET
COMPOSANTS POUR L'INDUSTRIE
AUTOMOBILE

F-25400 Audincourt (Doubs)(FR)

(72) Inventeur: Hoblingre, André

28, rue Vincent d'Indy
F-25700 Valentigney(FR)
Inventeur: Couvoisier, Patrick
13, rue de la Promenade, Vieux Charmont
F-25200 Montbeliard(FR)
Inventeur: Bertrand, Jean-Marie
22, rue du Pont, Mathay
F-25700 Valentigney(FR)

(74) Mandataire: Polus, Camille et al
c/o Cabinet Lavoix 2, Place d'Estienne
d'Orves
F-75441 Paris Cedex 09(FR)

(54) Dispositif de maintien d'un organe tubulaire en particulier d'une colonne de direction de véhicule automobile.

(57) L'organe tubulaire (1) est solidaire d'un organe d'assemblage (14) susceptible de coulisser dans une ferrure en U fixe, traversé par un tirant (20) guidé dans des lumières incurvées de la ferrure. Le tirant comporte une tête conique (42) tournée vers la surface conique (25) d'une rondelle (24) d'appui sur la ferrure. Des billes d'écartement (52) guidées radialement sur ces surfaces en regard sont logées dans des lumières inclinées d'un disque solidaire du levier de commande et déplacées par la rotation de ce dernier autour du tirant (20).

FIG.3

EP 0 427 584 A1

La présente invention concerne un dispositif de maintien d'un organe tubulaire, en particulier d'une colonne de direction de véhicule automobile, réglable par pivotement et/ou par déplacement axial.

La possibilité pour un conducteur de véhicule automobile de régler la position du volant est de plus en plus appréciée et contribue non seulement au confort du conducteur mais également à la maniabilité du véhicule. En conséquence, la colonne de direction qui supporte le volant est montée de manière pivotante sur un axe fixe de préférence horizontal et/ou est réalisée en plusieurs éléments susceptibles de se déplacer télescopiquement les uns par rapport aux autres. Elle est en outre supportée en un point intermédiaire par un dispositif de maintien qui comporte une ferrure, fixée sur la carrosserie et formant une structure en U renversé dans laquelle peut se déplacer la colonne, un organe d'assemblage solidaire de la colonne et en contact par des faces opposées avec les parois latérales du U de la ferrure, et des moyens de blocage par rapprochement des parois latérales de la ferrure comportant un tirant qui traverse, parallèlement à l'axe de pivotement, les faces latérales de la ferrure dans des lumières incurvées, entre deux butées d'appui extérieures.

Différents types de moyens de serrage ont été proposés et utilisés jusqu'ici pour agir sur les parois latérales de la ferrure par l'intermédiaire du tirant. Dans certains cas leur réalisation est très simple; ils comportent, par exemple, un écrou vissé sur un filetage de l'extrémité du tirant, mais leur efficacité est incertaine car l'action exercée sur l'écrou peut varier d'un conducteur à un autre.

D'autres dispositifs plus complexes utilisent des cames ou des systèmes à genouillères entraînées par un levier de commande mobile dans un plan perpendiculaire à l'axe de la colonne de direction. Le serrage est plus précis mais ces dispositifs sont sujet à l'usure et aux détériorations sous l'effet notamment des agressions extérieures telles que la corrosion, les chocs ou autres, de sorte qu'il est nécessaire de les vérifier et de les régler fréquemment. En outre, le levier de commande constitue souvent une gêne pour le conducteur.

La présente invention a pour but de remédier à ces inconvénients en fournissant un dispositif de maintien qui permette d'obtenir des positions de blocage et de desserrage précises et stables, avec des moyens de serrage peu encombrants et efficacement protégés contre les agressions extérieures.

Cette invention a en effet pour objet un dispositif de maintien du type ci-dessus dans lequel les moyens de serrage comportent, entre une tête élargie du tirant et la butée d'appui correspondante dont les surfaces en regard délimitent un espace de section sensiblement en V, au moins un organe d'espacement déplacé radialement par la rotation d'un levier de commande autour de l'axe du tirant.

Selon un mode de réalisation des billes d'écartement sont retenues par des chemins de roulement radiaux de la butée d'appui et/ou de la tête du tirant et logées dans des lumières inclinées d'un disque libre en rotation autour du tirant et solidaire du levier de commande.

De préférence, le disque et les organes d'écartement sont logés à l'intérieur d'un boîtier formé dans le levier de commande lui-même.

La rotation du levier de commande, et par suite des lumières contenant les billes autour de l'axe du tirant, provoque un déplacement radial des billes entre une position proche du tirant qui correspond au serrage de l'organe tubulaire et une position extérieure de desserrage.

La description ci-dessous d'un mode de réalisation, donné à titre d'exemple non limitatif et représenté aux dessins annexés, fera d'ailleurs ressortir les avantages et caractéristiques de l'invention. Sur ces dessins :

La figure 1 est une vue de dessus avec arrachement partiel, d'une colonne de direction réglable par pivotement munie d'un dispositif de maintien selon l'invention.

La figure 2 est une vue de côté de la colonne de la Fig.1.

La figure 3 est une vue à plus grande échelle, partie en vue de dessus avec arrachement partiel, partie en coupe, du dispositif de maintien monté sur la colonne, en position de desserrage.

La figure 4 est une vue en coupe suivant la ligne 4-4 de la Fig.3.

La figure 5 est une vue en coupe suivant la ligne 5-5 de la Fig.3.

La figure 6 est une vue analogue à la Fig.5 montrant les organes d'espacement en position de serrage.

La figure 7 est une vue de face de la butée d'appui munie de chemins de roulement.

La figure 8 est une vue analogue à la Fig.4 d'un dispositif de maintien d'une colonne télescopique.

L'exemple de réalisation représenté sur les dessins annexés concerne le maintien d'une colonne de direction de véhicule automobile, mais il apparaîtra clairement à l'homme de l'art que ceci n'est donné qu'à titre d'exemple indicatif et que le dispositif de maintien objet de l'invention peut également être utilisé pour d'autres types d'organes tubulaires réglables par pivotement et/ou par déplacement axial.

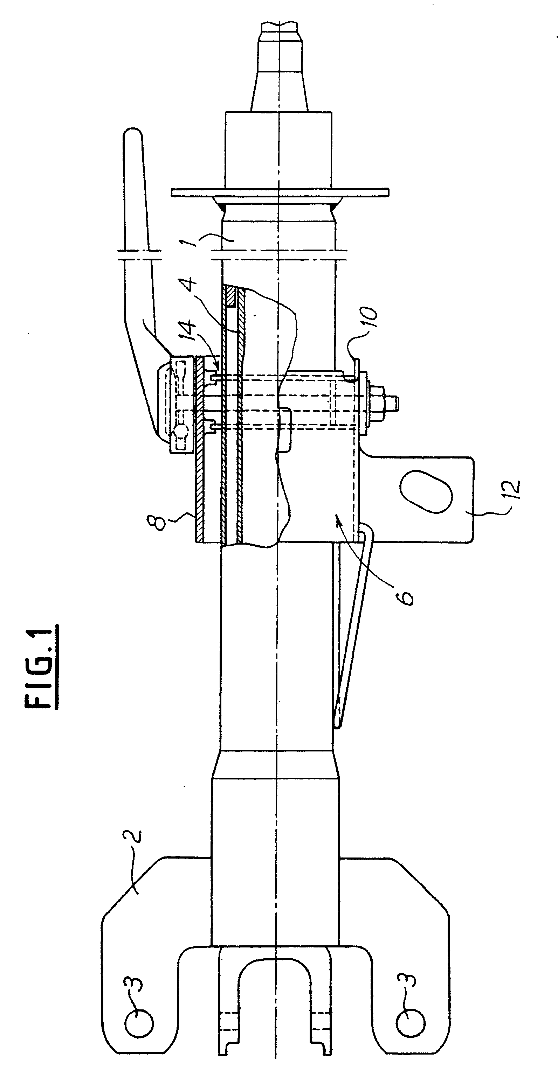

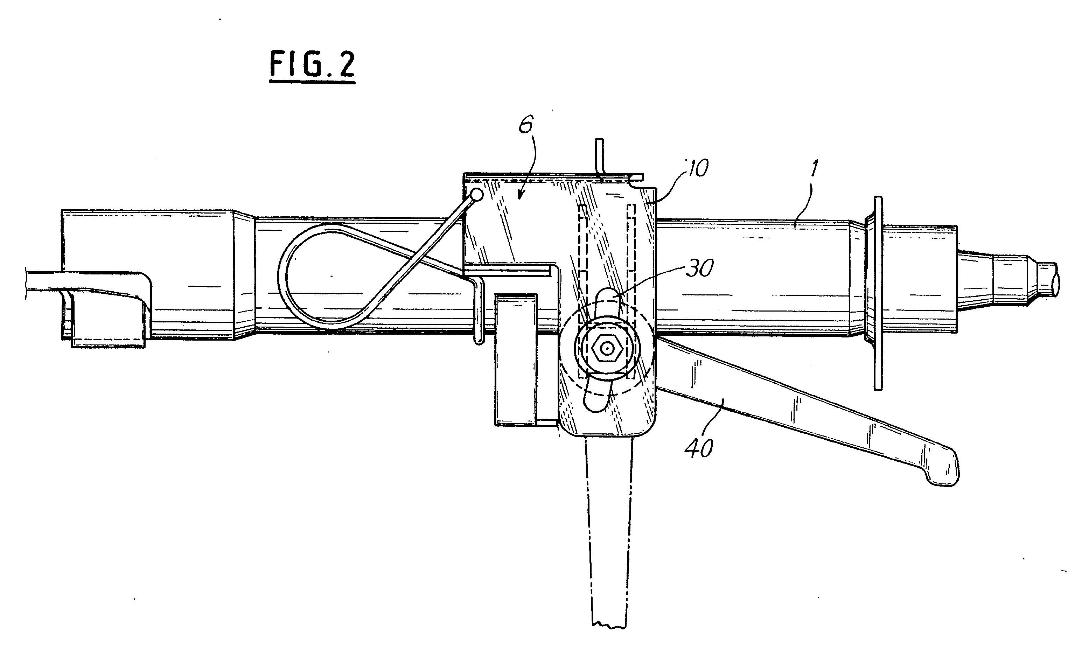

La colonne de direction représentée sur les Fig.1 à 4 comporte un tube-enveloppe 1 qui est solidaire, à sa partie inférieure, (Fig.1 et 2) de deux pattes 2, percées de trous 3, permettant sa fixation sur la carrosserie du véhicule et son pivotement autour d'un axe, de préférence horizontal, reliant les trous 3 des deux pattes 2. Cet axe (non représenté) est confondu avec l'axe d'articulation de l'extrémité inférieure d'un arbre de direction 4 monté rotatif dans le tube enveloppe 1 et portant à son extrémité supérieure un volant de direction (non représenté). La position de ce volant peut ainsi être modifiée en faisant pivoter l'ensemble de la colonne de direction autour de l'axe 3-3.

La colonne de direction est également fixée à la carrosserie du véhicule par l'intermédiaire d'une ferrure 6 formant une structure en U renversé dont les deux parois latérales, respectivement 8 et 10, pendent de part et d'autre de la colonne 1 et sont munies d'ailes horizontales 12 de fixation sur la carrosserie.

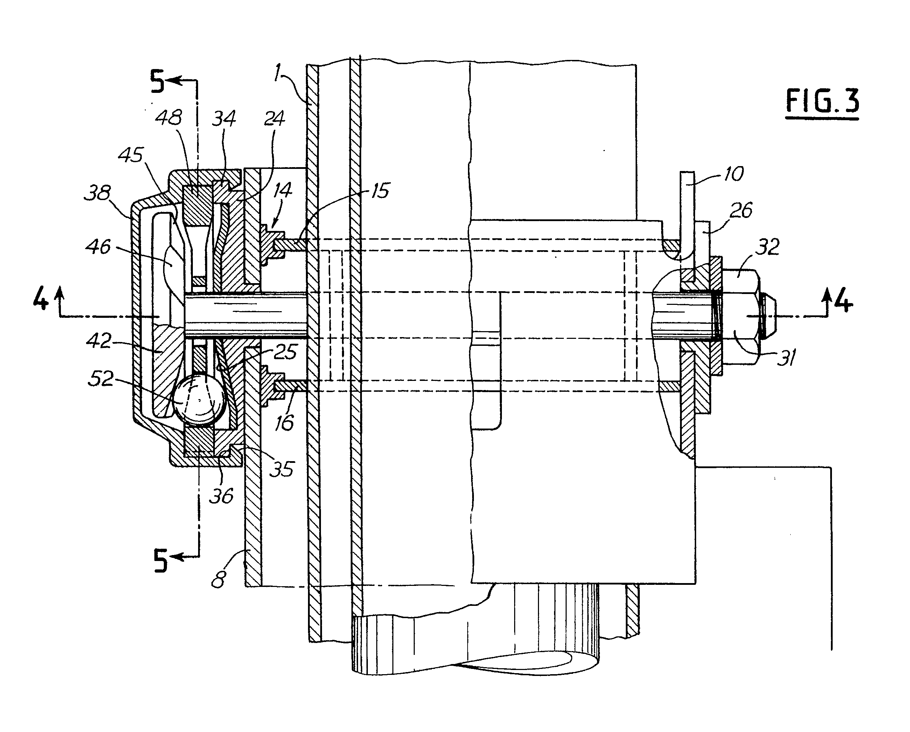

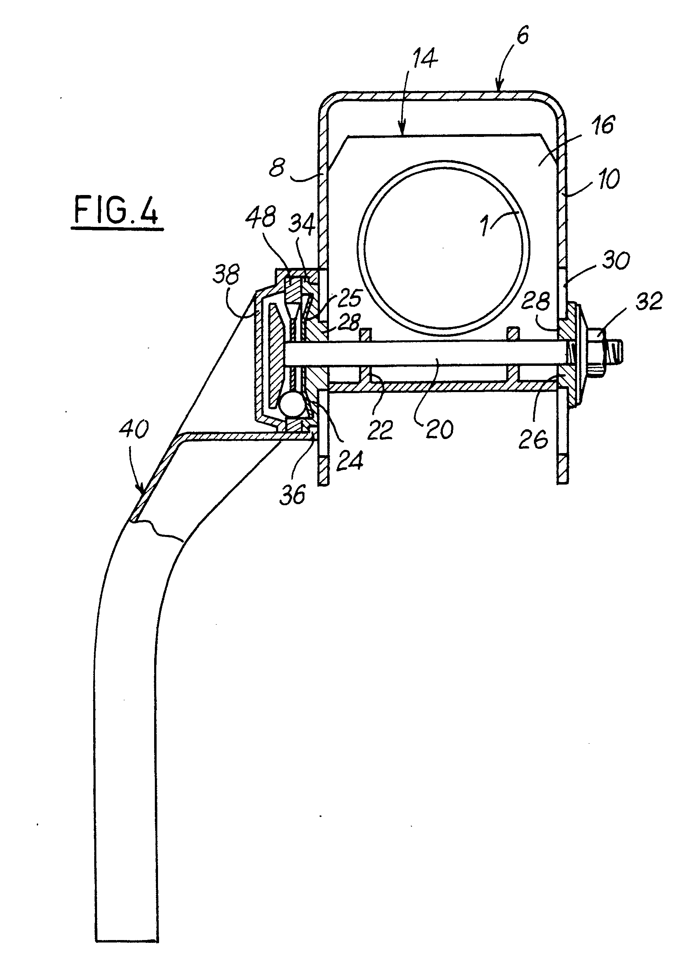

A l'intérieur de la ferrure 6, la colonne 1 est solidaire d'un organe d'assemblage 14 en contact avec les faces internes des parois latérales 8 et 10 de la ferrure et, en l'absence de tout serrage, susceptible de glisser le long de ces parois lors du pivotement de la colonne 1. Dans le mode de réalisation représenté, l'organe d'assemblage 14 a une section en U et comporte deux flancs plats parallèles, respectivement 15 et 16, percés chacun d'un orifice central et fixés, par exemple par soudage du bord de cet orifice sur le tube enveloppe 1 (Fig.3 et 4).

Les parois latérales 8 et 10 de la ferrure 6 sont maintenues en contact avec l'organe d'assemblage 14 au moyen d'un tirant 20 qui traverse ces deux parois ainsi que des pattes de guidage 22 de l'organe d'assemblage (Fig.4) et porte deux rondelles, respectivement 24 et 26, qui ont une face plane d'appui sur la paroi 8,10 correspondante, munie d'un téton central allongé 28 pénétrant dans une fente incurvée 30 de la paroi correspondante 8, 10.

Le contact du téton avec les parois de la fente 30 interdit la rotation de la rondelle 24,26 sur elle-même tout en assurant le guidage de son pivotement autour de l'axe 3.3. Par ailleurs, le téton 28 est percé d'un trou central de forme polygonale, par exemple carré, qui épouse la forme du tirant et assure la solidarisation de ce dernier en rotation et en pivotement avec la rondelle mais permet leur coulissement axial relatif.

L'une des extrémités 31 du tirant 20 est filetée et porte un écrou 32 qui appuie sur la rondelle 26 et règle sa position sur le tirant 20. A l'opposé, la rondelle 24 comporte un épaulement périphérique 34 qui délimite avec la paroi latérale 8, une rainure 35. Dans cette rainure est emboîté un rebord annulaire 36 formé sur le pourtour de l'ouverture d'un boîtier 38 constituant l'extrémité d'un levier de commande 40. La dimension de la rainure 35 et du rebord 36 sont telles que ce dernier, et en fait le boîtier 38 et le levier 40, peuvent tourner librement autour de la rondelle d'appui 24, c'est-à-dire autour de l'axe du tirant 20.

A l'intérieur du boîtier 38 la rondelle 24 a une surface 25 sensiblement tronconique, tandis que le tirant 20 est terminé par une tête élargie 42 qui a, en regard de la rondelle 24, également une surface 45 tronconique. Les surfaces en regard 25 et 45 délimitent ainsi entre elles un espace de section droite sensiblement en forme de V, évasé vers l'extérieur.

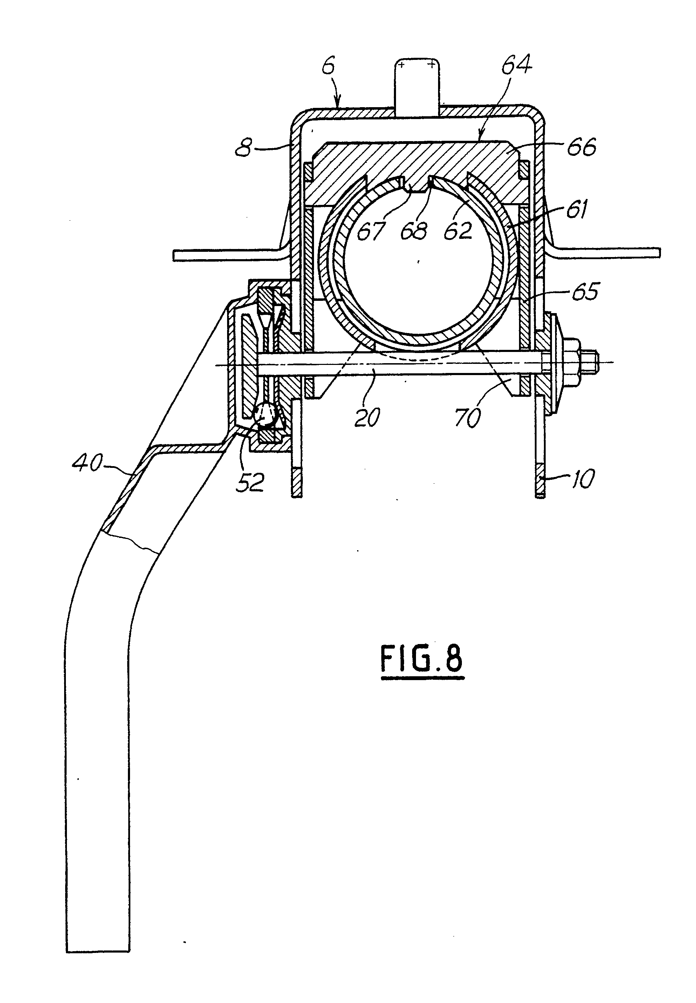

Dans la surface tronconique 25 de la rondelle 24 est ménagé au moins un chemin de roulement radial, ou rampe 44, de section arquée, et de préférence plusieurs rampes, trois dans le mode de réalisation représenté. Comme le montre plus particulièrement la Fig.7 chacun des chemins de roulement 44 s'étend depuis le voisinage du centre de la rondelle 24 jusqu'à un rebord périphérique formant l'épaulement 34. La surface tronconique 45 de la tête 42 du tirant 20 comporte de préférence le même nombre de chemins de roulement ou rampes 46, qui, de la même manière, s'étendent radialement en ayant une profondeur constante.

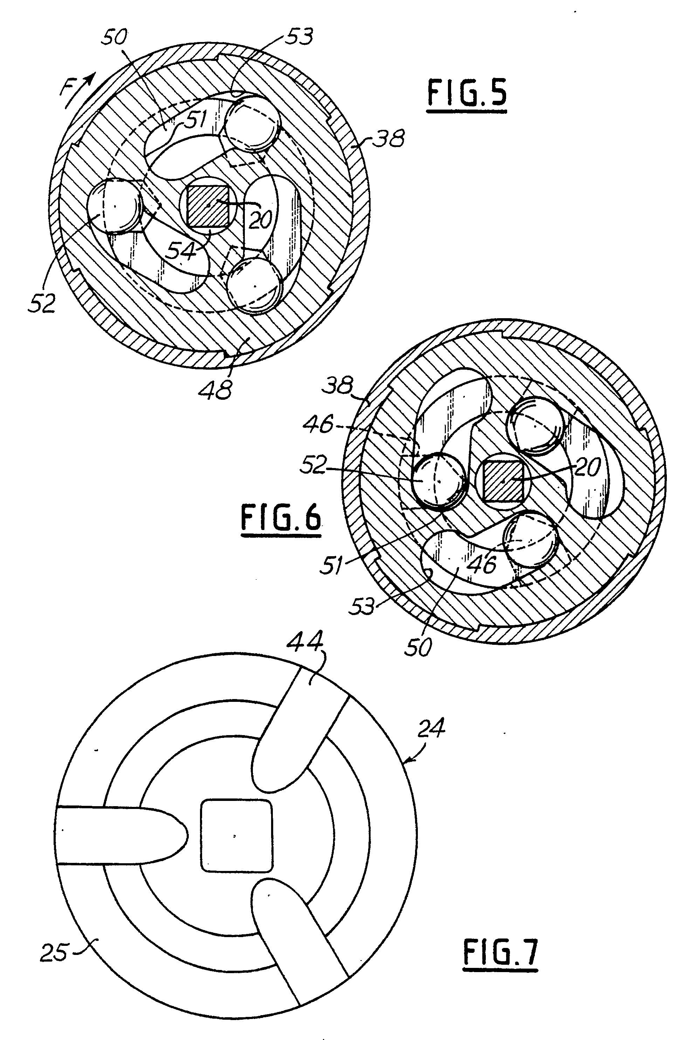

Entre ces deux surfaces tronconiques est monté un disque 48 solidaire du boîtier 38, qui est perpendiculaire au tirant 20 et libre en rotation par rapport à celui-ci. Le disque 48 a, par exemple, un orifice central circulaire 54 de diamètre légèrement supérieur à la diagonale de la section du tirant. Ce disque 48 comporte au moins une lumière 50 (Fig.5 et 6) inclinée par rapport à son rayon de telle sorte qu'elle comporte une extrémité 51 proche de l'orifice central 54, alors que son autre extrémité opposée 53 est sensiblement à égale distance entre cet orifice et la périphérie du disque. En fait chacune des lumières 50 comporte une portion centrale sensiblement rectiligne et est légèrement incurvée à ses extrémités. Une bille 52 est logée dans chacune des lumières 50 et fait saillie de part et d'autre de cette lumière pour entrer en contact avec le chemin de roulement en regard de la tête 42 et/ou de la rondelle de butée 24. De préférence le disque 48 a une portion centrale amincie au voisinage du tirant 20, dans la partie étroite de l'espace en V.

Lorsque le dispositif de maintien est dans la position de desserrage représentée sur les Fig.3 et 5, les billes 52 sont ainsi dans leur position la plus extérieure. Chaque bille 52 est en effet à la fois logée à l'extrémité 53 de la lumière 50 la plus éloignée du tirant 20 et de l'orifice central 54, et en simple contact avec des portions des chemins de roulement 44 et 46 relativemet éloignées l'une de l'autre. La tête 42 est espacée du fond du boîtier 38 et les rondelles de butée 24 et 26 sont en contact glissant avec les parois 8 et 10.

L'ensemble de la colonne peut pivoter en entraînant l'organe 14 et le tirant 20. Les tétons 28 guident ce déplacement. Le levier de commande 40 est de préférence sensiblement perpendiculaire au tube 1 et dirigé vers le bas.

Lorsque la position désirée est atteinte, un déplacement du levier 40 en direction du tube 1, c'est-à-dire un pivotement de ce levier dans le sens des aiguilles d'une montre, comme indiqué par la flèche F sur la Fig.5, commande le blocage. En effet, ce levier fait tourner le disque 48 autour du tirant 20 de telle sorte que le bord externe de chacune des lumières 50 repousse progressivement la bille 52 correspondante en direction de ce tirant, tandis que le ou les chemins de roulement radiaux 44 et/ou 46, qui sont immobilisés en rotation, limitent ce déplacement à un trajet radial. Chaque bille est donc repoussée vers les sommets en regard des surfaces coniques 25,45 et tend, par suite à les écarter l'une de l'autre, c'est-à-dire à repousser la rondelle 26 en direction de la paroi 8 et la tête 42 vers le fond du boîtier 38. Elle provoque donc un glissement axial et une tension du tirant 20 qui entraîne l'écrou 32 et l'oblige à serrer la rondelle 26 contre la paroi 10. Les parois 8 et 10 de la ferrure 6 sont alors déformées par rapprochement l'une de l'autre jusqu'au blocage de l'organe 14 entre elles.

Le levier atteint sa position active sensiblement parallèle à la colonne au moment où la bille 52 se loge dans l'extrémité 51 de la lumière 50, dans une portion légèrement incurvée qui assure son verrouillage en position stable et interdit tout déplacement accidentel.

Un nouveau réglage peut toutefois intervenir à tout moment. Il suffit de faire basculer le levier de commande 40 vers le bas, de la position représentée sur la Fig.1 à celle de la Fig.4. Le disque-came 48 tourne alors dans le sens antihoraire, en considérant les figures 5 et 6, de sorte que le bord intérieur de chaque lumière 50 fait sortir la bille 52 de l'extrémité 51 puis l'éloigne du tirant 20 guidée par les chemins de roulement. Chaque bille effectue un trajet radial vers l'extérieur et libère peu à peu le tirant 20 et les rondelles 24 et 26 qui desserrent leur appui contre la ferrure 6. Lorsque toutes les billes ont atteint la position extrême incurvée 53 de la lumière 50, l'organe 14 et le tube 4 peuvent pivoter.

Cette position de desserrage est nettement déterminée et, comme la position de serrage, facilement ressentie par le conducteur. Elle est en outre, une position stable du fait même de la forme de la lumière 50, de sorte que le fonctionnement du dispositif de maintien est très précis et sûr. En outre, la protection assurée par le boîtier 38, qui abrite tous les organes actifs du dispositif, rend cette sûreté extrêmement fiable, en évitant les risques d'agression extérieurs. Elle permet par ailleurs de réduire l'encombrement de l'ensemble, les moyens de serrage étant montés à l'intérieur même du levier de commande.

Bien entendu l'organe d'assemblage 14 peut avoir des formes diverses sans que le dispositif de maintien ait besoin d'être modifié. Il peut notamment être réalisé de manière à permettre l'assemblage d'un organe tubulaire télescopique réglable axialement et même d'un organe susceptible d'être réglé à la fois axialement et par pivotement.

La Fig.8 illustre un mode de réalisation dans lequel un organe tubulaire, par exemple une colonne de direction télescopique dont le tube enveloppe comporte un tube extérieur 61 dans lequel coulisse un tube interne 62, est monté dans la ferrure 6 par l'intermédiaire d'un organe d'assemblage 64. Cet organe 64 comporte deux flasques 65 parallèles chacun à l'une des parois latérales 8, 10 de la ferrure 6 et reliés entre eux, à leur partie supérieure, par une entretoise 66. L'entretoise 66 est également fixée au tube externe 61 et est prolongée par un doigt de clavetage 67 guidé dans une fente longitudinale 68 du tube interne 62.

A l'opposé de l'entretoise 66, chaque flasque 65 porte deux ailes 70 qui lui sont perpendiculaires et traversent des fentes du tube externe pour venir en appui sur le tube interne lors du serrage de l'ensemble. Entre leurs ailes 70, les flasques 65 sont percés chacun d'un trou de passage du tirant 20 du dispositif de blocage décrit ci-dessus.

En conséquence lorsque les billes 52 sont, comme représenté, dans leur position extérieure de desserrage, la colonne 61, 62 est libre. Le tube coulissant 62 peut être déplacé par rapport au tube externe et/ou l'ensemble de la colonne peut pivoter et l'organe d'assemblage 64 glisser le long des parois de la ferrure 6. Lorsque le réglage désiré est effectué, la manoeuvre du levier de commande 40 fait tourner la rondelle came 48 et, en rapprochant les parois 8 et 10 des flasques 65, serre les ailes 70 sur le tube interne et immobilise ainsi les deux tubes.

D'autres formes d'organe d'assemblage et/ou de ferrure peuvent bien entendu également être utilisées entre le dispositif de blocage de l'invention et l'organe tubulaire à maintenir.

## Revendications

1. Dispositif de maintien d'un organe tubulaire et en particulier une colonne de direction de véhicule automobile, réglable de façon continue par pivotement et/ou par déplacement axial, comportant une ferrure (6) fixée sur la carrosserie et formant une structure en U renversé dans laquelle peut se déplacer l'organe tubulaire, un organe d'assemblage (14) solidaire de l'organe tubulaire et en contact par deux faces opposées (15,16) avec les parois latérales (8,10) de la ferrure et des moyens de blocage par rapprochement des parois latérales de la ferrure comportant un tirant (20) qui traverse, parallèlement à l'axe de pivotement (3.3), les faces latérales de la ferrure dans des lumières incurvées (30), entre deux butées d'appui extérieures (24,26), caractérisé en ce que les moyens de blocage comportent entre une tête élargie (42) du tirant (20) et la butée d'appui correspondante (24) dont les surfaces en regard délimitent un espace de section sensiblement en V, au moins un organe d'espacement (52) déplacé radialement par la rotation d'un levier de commande (40) autour de l'axe du tirant (20).

2. Dispositif de maintien suivant la revendication 1, caractérisé en ce que chaque organe d'espacement (52) est entraîné par un disque (48) solidaire du levier de commande (40) et retenu par un chemin de roulement radial (44,46) ménagé dans l'une des faces en regard de l'espace de section en V.

3. Dispositif de maintien suivant la revendication 2, caractérisé en ce que chaque organe d'espacement (52) est retenu par un chemin de roulement (46) ménagé dans la tête (42) du tirant (20).

4. Dispositif suivant l'une des revendications 2 et 3, caractérisé en ce que chaque organe d'espacement (52) est retenu par un chemin de roulement (44) ménagé dans la rondelle d'appui (24).

5. Dispositif de maintien suivant l'une des revendications 2 à 4, caractérisé en ce que le disque (48) comporte une lumière (50) inclinée par rapport à son rayon, de réception de chacun des organes d'espacement (52).

6. Dispositif de maintien suivant la revendication 5, caractérisé en ce que chaque lumière (50) comporte une partie centrale sensiblement rectiligne et au moins une portion d'extrémité incurvée (51,53) qui assure un verrouillage stable.

7. Dispositif de maintien suivant l'une des revendications 1 à 6, caractérisé en ce que la tête (42) du tirant (20) et la butée d'appui (24), ont en regard l'une de l'autre des surfaces de forme tronconique dans lesquelles sont ménagés des rampes radiales (44,46) ayant une section arquée.

8. Dispositif de maintien suivant l'une des revendications précédentes, caractérisé en ce que chaque butée d'appui est constituée par une rondelle (24,26) susceptible de coulisse axialement sur le tirant (20) et munie d'un téton (28) pénétrant dans une fente incurvée (30) de la ferrure (6).

9. Dispositif de maintien suivant l'une des revendications précédentes, caractérisé en ce que l'extrémité du tirant (20) opposée à la tête (42) est filetée et porte un écrou (32) de réglage de tension en appui sur la butée correspondante (26).

# FIG.1

EP 0 427 584 A1

# FIG.2

EP 0 427 584 A1

FIG.3

EP 0 427 584 A1

FIG.4

FIG.5

FIG.6

FIG.7

FIG.8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 360 454 (CHRYSLER FRANCE) <br> * Revendications; figures * <br> − − − | 1 | B 62 D <br> 1/18 <br> F 16 B 2/16 <br> F 16 B 7/14 |
| A | FR-A-2 491 024 (NISSAN) <br> * Revendications; figures * <br> − − − | 1 | |
| A | FR-A-1 523 214 (BORG-WARNER) <br> * Revendications; figures * <br> − − − − − | 1 | |

| DOMAINES TECHNIQUES RECHERCHES (Int. Cl.5) |
|---|
| B 62 D <br> F 16 B |

Le présent rapport de recherche a été établi pour toutes les revendications

| Lieu de la recherche | Date d'achèvement de la recherche | Examinateur |
|---|---|---|
| La Haye | 07 février 91 | PIRIOU J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant